# EUROPEAN PATENT APPLICATION

(11) **EP 4 383 401 A1**
(43) Date of publication of application: **12.06.2024**
(21) Application number: 23205011.2
(22) Date of filing: 20.10.2023
(51) Int. Cl.: H01M 10/42, H01M 50/296, H01M 10/0525

(54) **BATTERY PROTECTION TECHNIQUES**

(30) Priority: 06.12.2022 KR 20220169049
(71) Applicant: SK On Co., Ltd., Seoul 03161 (KR)
(72) Inventor: DO, Won Seok, 34124 Daejeon (KR); PARK, Chan Ho, 34124 Daejeon (KR); KIM, Yong Uk, 34124 Daejeon (KR); SEOK, Jong Ho, 34124 Daejeon (KR)
(74) Representative: Prüfer & Partner mbB Patentanwälte · Rechtsanwälte

(57) **Abstract**

A terminal unit (10) and a battery protection unit (2) including the terminal unit are disclosed. In an embodiment of the disclosed technology, a terminal unit (10) may include a terminal housing (100) including an accommodation space, a connection duct connected to a rear face of the terminal housing (100) and structured to communicate with the accommodation space, and a door (300) connected to the terminal housing (100). The door (300) includes a door body (305) including an end coupled to a hinge of the terminal housing (100), and a door coupling part (340) positioned at another end of the door body (305) and detachably coupled to the terminal housing (100). The door body (305) includes a door groove (320) that is concave toward the connection duct in a state in which the door coupling part (340) is coupled to the terminal housing (100).

## Description

### TECHNICAL FIELD

The disclosed technology generally relates to an energy storage system.

### BACKGROUND

An energy storage system may include a power conversion system and a battery power line. Since batteries used in the energy storage system often have high voltage or large current, it is necessary to ensure safety while easily connecting the battery power line to the energy storage system.

(Patent Document 1) KR 10-2313082 B1

### SUMMARY

The disclosed technology can be implemented in some embodiments to provide an energy storage system that includes a terminal unit structured to be easily connected to a power conversion system and a battery power line, and a battery protection unit including the terminal unit.

A terminal unit based on an embodiment of the disclosed technology may comprise a terminal housing including an accommodation space, a connection duct connected to a rear face of the terminal housing and structured to communicate with the accommodation space, and a door connected to the terminal housing, wherein the door includes a door body including an end coupled to a hinge of the terminal housing, and a door coupling part positioned at another end of the door body and detachably coupled to the terminal housing, wherein the door body includes a door groove that is concave toward the connection duct in a state in which the door coupling part is coupled to the terminal housing.

A battery protection unit configured to connect a battery module group to a power conversion system based on an embodiment of the disclosed technology may comprise a battery protection unit case including a battery protection unit case plate forming a front face of the battery protection unit, and a plurality of terminal units coupled to the battery protection unit case plate, wherein each of the plurality of terminal units includes a terminal housing including an accommodation space, a connection duct connected to a rear face of the terminal housing and structured to communicate with the accommodation space, and a door connected to the terminal housing, wherein the door includes a door body including an end coupled to a hinge of the terminal housing, and a door coupling part positioned at another end of the door body and detachably coupled to the terminal housing, wherein the door body includes a door groove that is concave toward the connection duct in a state in which the door coupling part is coupled to the terminal housing.

The terminal housing may include a back plate connected to the connection duct, a bottom plate including a bottom plate body, the bottom plate body extending forward from the back plate and forming a lower surface of the terminal housing, and a top plate extending forward from the back plate and forming an upper surface of the terminal housing. A front end of the connection duct may be positioned in the accommodation space, and a rear end of the connection duct may be positioned behind the terminal housing.

The bottom plate may further include a bottom bay that is formed on the bottom plate body and includes a concave groove recessed in a forward direction.

The door groove may face the bottom bay in the state in which the door coupling part is coupled to the terminal housing.

The terminal housing may further include a side plate extending forward from the back plate and connecting the bottom plate and the top plate. The side plate may include a first side plate hinge-coupled to the door body, and a second side plate positioned opposite to the first side plate and detachably coupled to the door coupling part.

The second side plate may include a second side plate body forming a skeleton or frame of the second side plate, and a door seating part protruding from an outer surface of the second side plate body and coupled to the door coupling part.

The second side plate may further include a second side plate opening formed in the second side plate body and positioned adjacent to the door seating part, and the door seating part may be formed along a perimeter of the second side plate opening.

The door groove may be open downward.

The door may further include a door top cover coupled to an upper end of the door body, and the door top cover may form an upper surface of the door and cover an upper end of the door groove.

The connection duct may include a first connection duct and a second connection duct that are disposed vertically and are spaced apart from each other.

In an embodiment of the disclosed technology, a terminal unit capable of easily connecting a power conversion system and a battery power line and a battery protection unit including the terminal unit can be provided.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates an example of an energy storage system based on an embodiment of the disclosed technology.
FIG. 2 illustrates an example of an energy storage system based on an embodiment of the disclosed technology.
FIG. 3 is a perspective view of an example of a terminal unit based on an embodiment of the disclosed technology.
FIG. 4 illustrates an example of a terminal unit based on an embodiment of the disclosed technology when viewed from above.
FIG. 5 illustrates an example of a terminal unit based on an embodiment of the disclosed technology when viewed from below.
FIG. 6 illustrates an example of a terminal unit based on an embodiment of the disclosed technology when viewed from the front.

### DETAILED DESCRIPTION

Reference will now be made in detail to embodiments of the disclosed technology, examples of which are illustrated in the accompanying drawings. However, the following description is merely an example and does not limit the disclosed technology to a specific implementation.

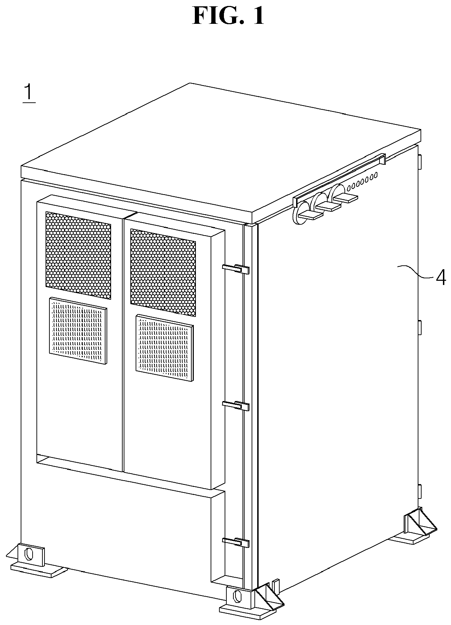

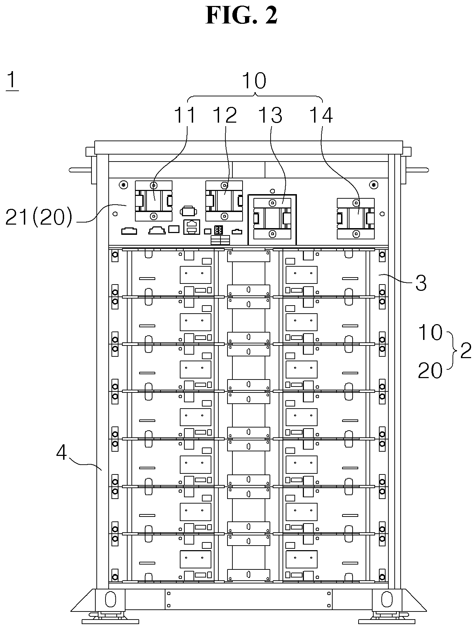

FIG. 1 illustrates an example of an energy storage system based on an embodiment of the disclosed technology. FIG. 2 illustrates an example of an energy storage system based on an embodiment of the disclosed technology. This example energy storage system includes a terminal unit, that safely and effectively connects a battery power line and a power conversion system, and a battery protection unit including the terminal unit.

Referring to FIGS. 1 and 2, an energy storage system 1 based on an embodiment of the disclosed technology may include a battery module group 3. The battery module group 3 may store electrical energy. For example, the battery module group 3 may store electrical energy (e.g., charging) and provide the stored electrical energy to an external device (e.g., discharging).

The battery module group 3 may include, for example, a lithium-ion secondary battery. The battery module group 3 may include a plurality of battery modules. The plurality of battery modules in the battery module group 3 may be electrically connected to each other and/or to an external device. For example, the plurality of battery modules in the battery module group 3 may be connected in parallel or in series by connecting the plurality of battery modules using electrical cables.

The energy storage system 1 may include an energy storage system case 4. The energy storage system case 4 may include a space to accommodate the battery module group 3. The energy storage system case 4 may include a rack structured to support or hold the plurality of battery modules.

The energy storage system 1 may include a battery protection unit 2. In some implementations, the battery protection unit 2 may be used to protect the plurality of battery modules from electrical or mechanical impact. In some implementations, the battery protection unit 2 may be accommodated in the energy storage system case 4. The battery protection unit 2 may be electrically connected to the battery module group 3.

The battery protection unit 2 may electrically connect the battery module group 3 to a power conversion system (not shown). For example, the battery protection unit 2 may receive electrical power from the battery module group 3 and deliver the received electrical power to the power conversion system. In this process, the battery module group 3 may be discharged. For another example, the battery protection unit 2 may receive electrical power from the power conversion system and provide the received electrical power to the battery module group 3. In this process, the battery module group 3 may be charged.

The battery protection unit 2 may include a battery protection unit case 20. The battery protection unit case 20 may include, for example, a battery protection unit case plate 21. The battery protection unit case plate 21 may form a front face or a rear face of the battery protection unit 2.

The battery protection unit 2 may include a terminal unit 10. The terminal unit 10 may be accommodated in or coupled to the battery protection unit case 20. For example, the terminal unit 10 may be accommodated in or coupled to the battery protection unit case plate 21. In some implementations, the terminal unit 10 may be configured to provide an electrical connection to send power to or from the battery module group 3 disposed in the energy storage system 1. In one example, the terminal unit 10 may include electrical contacts that can be used to connect a load or charger to the battery module group 3 disposed in the energy storage system 1.

The terminal unit 10 may be connected to a first cable that is connected to the battery module group 3. The terminal unit 10 may be connected to a second cable that is connected to the power conversion system. The terminal unit 10 may provide a space in which the first cable and the second cable are connected.

In other words, the first cable and the second cable may be connected in the terminal unit 10. That is, the first cable and the second cable are connected to each other in a portion of the terminal unit 10 e.g., inside the terminal unit 10.

In some implementations, a plurality of terminal units 10 may be provided. The plurality of terminal units 10 may include, for example, a first terminal unit 11, a second terminal unit 12, a third terminal unit 13, and a fourth terminal unit 14.

At least some terminal units 10 of the plurality of terminal units 10 may be connected to each other through cables. For example, the first terminal unit 11 and the third terminal unit 13 may be connected to each other through a cable. For example, the second terminal unit 12 and the fourth terminal unit 14 may be connected to each other through a cable.

At least some terminal units 10 of the plurality of terminal units 10 may be connected to the power conversion system. For example, the first terminal unit 11 may be connected to a positive power line of the power conversion system. For example, the second terminal unit 12 may be connected to a negative power line of the power conversion system.

Other terminal units 10 of the plurality of terminal units 10 may be electrically connected to the battery module group 3 through cables. For example, the third terminal unit 13 may be connected to a cable that is connected to an anode of the battery module group 3. For example, the fourth terminal unit 14 may be connected to a cable that is connected to a cathode of the battery module group 3.

The positive power line connected to the first terminal unit 11 may be electrically connected to the cable connected to the third terminal unit 13 and may be electrically connected to the anode of the battery module group 3. The negative power line connected to the second terminal unit 12 may be electrically connected to the cable connected to the fourth terminal unit 14 and may be electrically connected to the cathode of the battery module group 3. In this way, the battery module group 3 and the power conversion system may be electrically connected.

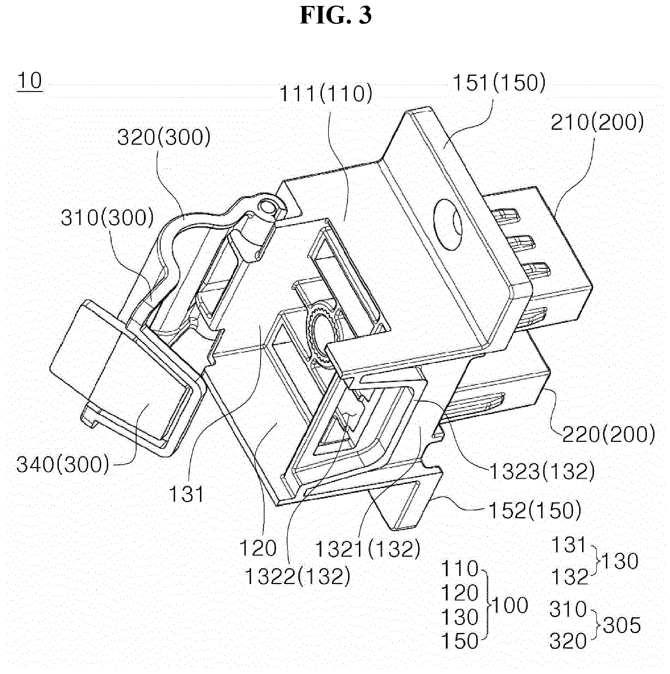

FIG. 3 is a perspective view of an example of the terminal unit 10 based on an embodiment of the disclosed technology.

Referring to FIG. 3, the terminal unit 10 may include a terminal housing 100. The terminal housing 100 may form a skeleton or frame of the terminal unit 10. The terminal housing 100 may form an accommodation space structured to accommodate the cable. The accommodation space formed by the terminal housing 100 may be open in a forward direction.

The terminal housing 100 may include a bottom plate 110. The bottom plate 110 may include a bottom plate body 111. The bottom plate body 111 may form a lower surface of the terminal housing 100. The bottom plate 110 may form a curved portion that is open in a forward direction.

The terminal housing 100 may include a top plate 120. The top plate 120 may form an upper surface of the terminal housing 100. The top plate 120 may be positioned above the bottom plate 110.

The terminal housing 100 may include a side plate 130. The side plate 130 may connect the bottom plate 110 and the top plate 120. The side plate 130 may include a first side plate 131 and a second side plate 132. The first side plate 131 and the second side plate 132 may face each other.

The second side plate 132 may include a second side plate body 1321. The second side plate body 1321 may form a skeleton or frame of the second side plate 132.

The second side plate 132 may include a second side plate opening 1322. The second side plate opening 1322 may be formed in the second side plate body 1321. The second side plate opening 1322 may accommodate a portion of a door coupling part 340. A worker can easily combine the two cables through the second side plate opening 1322.

The second side plate 132 may include a door seating part 1323. The door seating part 1323 may be formed on the second side plate body 1321 near the second side plate opening 1322. For example, the door seating part 1323 may protrude from an outer surface of the second side plate body 1321. For example, the door seating part 1323 may be formed along a perimeter of the second side plate opening 1322.

The terminal housing 100 may include a flange 150. The flange 150 may be coupled to the battery protection unit case 20 (see FIG. 2). The flange 150 may include a first flange 151 and a second flange 152. The first flange 151 may extend in a downward direction from a rear end of the bottom plate 110. The second flange 152 may extend in an upward direction from a rear end of the top plate 120.

The terminal unit 10 may include a connection duct 200. The connection duct 200 may be connected or coupled to the terminal housing 100. The connection duct 200 may pass through the terminal housing 100.

The connection duct 200 may extend in a forward direction from a rear end and lead to a front end. The rear end of the connection duct 200 may be positioned behind the terminal housing 100. The front end of the connection duct 200 may be positioned in a space formed in the terminal housing 100.

The connection duct 200 may form a hollow portion. The hollow portion of the connection duct 200 may extend from the front end of the connection duct 200 and lead to the rear end of the connection duct 200. In other words, the front end of the connection duct 200 may communicate with the rear end of the connection duct 200.

The connection duct 200 may include a space structured to accommodate the cable. For example, one end of the cable may enter the rear end of the connection duct 200, pass through the hollow portion of the connection duct 200, and be positioned in an inner space of the terminal housing 100.

In some implementations, a plurality of connection ducts 200 may be provided. For example, the connection duct 200 may include a first connection duct 210 and a second connection duct 220. The first connection duct 210 and the second connection duct 220 may be spaced apart from each other. The first connection duct 210 may be positioned below the second connection duct 220. The position of a cable connected to the terminal unit 10 when there are more than one connection ducts 200 may be different from the position of a cable connected to the terminal unit 10 when there is only one connection duct 200.

For example, the cable connected to the terminal unit 10 may be connected to the first connection duct 210 without changing the position of the cable connected to the terminal unit 10. However, in a situation where the terminal unit 10 is upside down and is disposed in the battery protection unit 20 (see FIG. 2), the cable connected to the terminal unit 10 may be connected to the second connection duct 220. As a result, a degree of freedom of connection between the terminal unit 10 and the cable can be increased compared to the conventional terminal block (or terminal unit).

In addition, the cable connected to the terminal unit 10 may form a high voltage of 1,000 volts (V) or higher. Even if a high voltage is formed in the cable, the remaining connection duct 200 that is not connected to the cable among the first connection duct 210 and the second connection duct 220 may separate other component from the cable. Thus, in the design of the structure and component arrangement of the battery protection unit 20 (see FIG. 2), the terminal unit 10 illustrated in FIG. 3 may be more advantageous than the conventional terminal block (or terminal unit).

The terminal unit 10 may include a door 300. The door 300 may be coupled to the terminal housing 100. For example, the door 300 may be used to allow an inner space of the terminal housing 100 to be accessed from outside or to block an access to the inner space of the terminal housing 100.

The door 300 may include a door body 305. The door body 305 may be hinge-coupled (e.g., coupled using a hinge) to the terminal housing 100. For example, the door body 305 may be hinge-coupled to the first side plate 131. For example, the door body 305 may be hinge-coupled to a front end of the first side plate 131.

The door body 305 may include a door plate 310. The door plate 310 may be hinge-coupled to the terminal housing 100. The door plate 310 may form a plate shape.

The door body 305 may include a door groove 320. The door groove 320 may be formed in the door plate 310. For example, the door groove 320 may be formed by bending the door plate 310 at the center of the door plate 310. The door groove 320 may be concave toward a space formed in the terminal housing 100.

The door groove 320 may form a space. The space formed by the door groove 320 may be open in a rearward direction. The space formed by the door groove 320 may be open in a downward direction. The space formed by the door groove 320 may form an opening, into which the cable is introduced or inserted, along with the curved portion formed by the bottom plate 110.

The door 300 may include the door coupling part 340. The door coupling part 340 may be coupled to the door body 305. The door coupling part 340 may extend from the door body 305. The door coupling part 340 may be integrally formed with the door body 305. For example, one end of the door body 305 may be hinge-coupled to the first side plate 131, and another end of the door body 305 may be connected to the door coupling part 340.

The door coupling part 340 may be coupled to the terminal housing 100. For example, the door coupling part 340 may be coupled to the second side plate 132. For example, the door coupling part 340 may be coupled to the door seating part 1323. The coupling between the terminal housing 100 and the door coupling part 340 may be released.

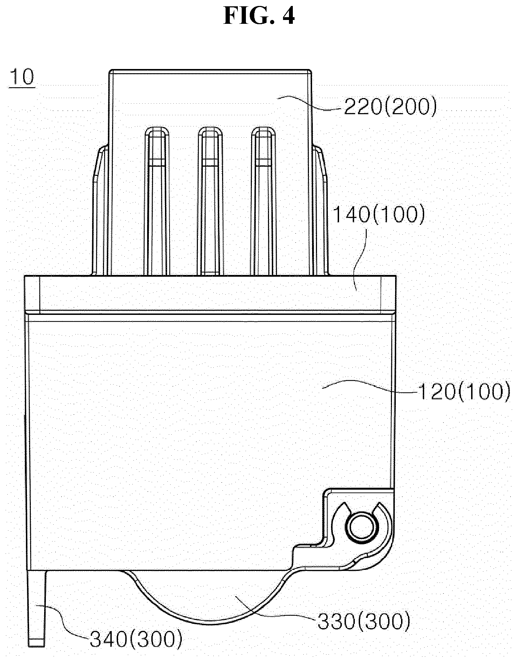

FIG. 4 illustrates an example of a terminal unit based on an embodiment of the disclosed technology when viewed from above.

Referring to FIGS. 3 and 4, the door 300 may include a door top cover 330. The door top cover 330 may form an upper end and/or upper surface of the door 300. The door top cover 330 may be connected to an upper end of the door body 305. The door top cover 330 may cover an upper portion of the space formed in the door groove 320. Accordingly, an accident in which a worker's finger or the like is caught in the door groove 320 can be suppressed.

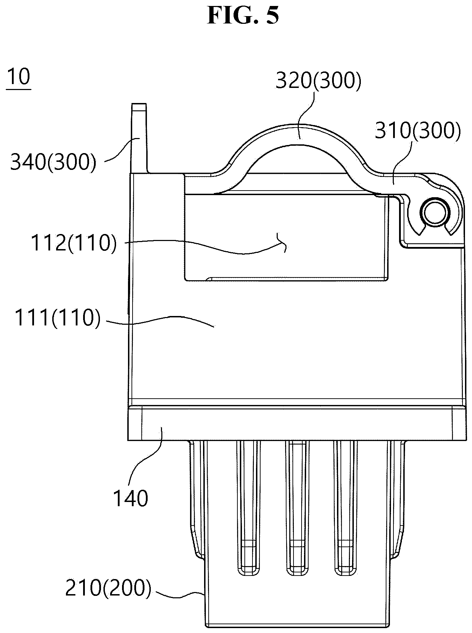

FIG. 5 illustrates an example of a terminal unit based on an embodiment of the disclosed technology when viewed from below.

Referring to FIGS. 3 and 5, the bottom plate 110 may include the bottom plate body 111 and a bottom bay 112. In some implementations, the bottom bay 112 may include a curved portion formed on the bottom plate body 111. In some implementations, the bottom bay 112 may include an opening formed by recessing a front end of the bottom plate body 111 in a backward direction.

The bottom bay 112 may face the door groove 320. The bottom bay 112 and the door groove 320 may communicate with each other. A lower end of the door groove 320 and the bottom bay 112 may form an opening into which the cable is to be introduced or inserted. A cable passing through the lower end of the door groove 320 and the bottom bay 112 may be connected to another cable passing through the connection duct 200.

The terminal housing 100 may include a back plate 140. In a state in which the door coupling part 340 is coupled to the terminal housing 100, the back plate 140 may face the door body 305. The connection duct 200 may pass through the back plate 140.

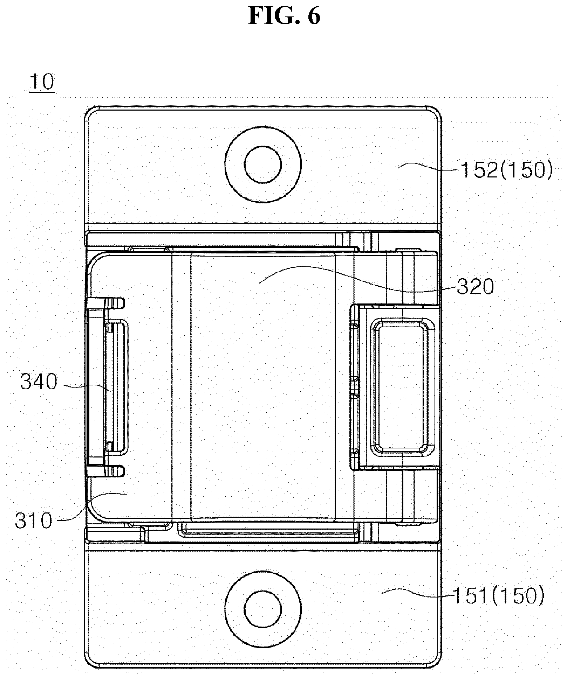

FIG. 6 illustrates an example of a terminal unit based on an embodiment of the disclosed technology when viewed from the front.

Referring to FIGS. 3 and 6, the flange 150 may include the first flange 151 and the second flange 152. The first flange 151 may extend downward from a lower end of the back plate 140 or extend downward from the rear end of the bottom plate 110. The second flange 152 may extend upward from an upper end of the back plate 140 or extend upward from the rear end of the top plate 120.

Only specific examples of implementations of certain embodiments are described. Variations, improvements and enhancements of the disclosed embodiments and other embodiments may be made based on the disclosure of this patent document.

## Claims

1. A terminal unit (10) comprising:
a terminal housing (100) including an accommodation space;
a connection duct (200) connected to a rear face of the terminal housing (100) and structured to communicate with the accommodation space; and
a door (300) connected to the terminal housing (100),
wherein the door (300) includes:
a door body (305) including an end coupled to a hinge of the terminal housing (100); and
a door coupling part (340) positioned at another end of the door body (305) and detachably coupled to the terminal housing (100),
wherein the door body (305) includes a door groove (320) that is concave toward the connection duct (200) in a state in which the door coupling part (340) is coupled to the terminal housing (100).

2. The terminal unit (10) of claim 1, wherein the terminal housing (100) includes:
a back plate (140) connected to the connection duct (200);
a bottom plate (110) including a bottom plate body (111), the bottom plate body (111) extending forward from the back plate (140) and forming a lower surface of the terminal housing (100); and
a top plate (120) extending forward from the back plate (140) and forming an upper surface of the terminal housing (100),
wherein a front end of the connection duct (200) is positioned in the accommodation space, and
wherein a rear end of the connection duct (200) is positioned behind the terminal housing (100).

3. The terminal unit (10) of claim 2, wherein the bottom plate (110) further includes a bottom bay (112) that is formed on the bottom plate body (111) and is concave forward.

4. The terminal unit (10) of claim 3, wherein the door groove (320) faces the bottom bay (112) in the state in which the door coupling part (340) is coupled to the terminal housing (100).

5. The terminal unit (10) of anyone of claims 2 to 4, wherein the terminal housing (100) further includes a side plate (130) extending forward from the back plate (140) and connecting the bottom plate (110) and the top plate (120), and
wherein the side plate (130) includes:
a first side plate (131) hinge-coupled to the door body (305); and
a second side plate (132) positioned opposite to the first side plate (131) and detachably coupled to the door coupling part (340).

6. The terminal unit (10) of claim 5, wherein the second side plate (132) includes:
a second side plate body (1321) extending from the back plate (140); and
a door seating part (1323) protruding from an outer surface of the second side plate body (1321) and coupled to the door coupling part (340).

7. The terminal unit (10) of claim 6, wherein the second side plate (132) further includes a second side plate opening (1322) formed in the second side plate body (1321) and positioned adjacent to the door seating part (1323), and
wherein the door seating part (1323) is formed along a perimeter of the second side plate opening (1322).

8. The terminal unit (10) of claim 3, wherein the door groove (320) is open downward.

9. The terminal unit (10) of anyone of claims 1 to 8, wherein the door (300) further includes a door top cover (330) coupled to an upper end of the door body (305), and the door top cover (330) forms an upper surface of the door (300) and covers an upper end of the door groove (320).

10. The terminal unit (10) of anyone of claims 1 to 9, wherein the connection duct (200) includes a first connection duct (210) and a second connection duct (220) that are disposed vertically and are spaced apart from each other.

11. The terminal unit (10) of anyone of claims 1 to 10, wherein the terminal unit (10) connects a power conversion system and a battery power line.

12. The terminal unit (10) of claim 11 is connected to a first cable that is connected to the battery module group (3) and connected to a second cable that is connected to the power conversion system.

13. A battery protection unit (2) configured to connect a battery module group (3) to a power conversion system, the battery protection unit (2) comprising:
a battery protection unit case (20) including a battery protection unit case plate (21) forming a front face of the battery protection unit (2); and
a plurality of terminal units (10) coupled to the battery protection unit case plate (21),
wherein each of the plurality of terminal units (10) is defined as the terminal unit according to anyone of claims 1 to 12.

14. A energy storage system (1) including the battery protection unit (2) according to claim 13.

15. The energy storage system (1) of clam 14, wherein the energy storage system (1) further includes a battery module group (3) and a power conversion system.
